# FASCICULE DE BREVET EUROPEEN

(11) **EP 3 157 883 B1**
(45) Date de publication et mention de la délivrance du brevet: **18.07.2018**
(21) Numéro de dépôt: 15733655.3
(22) Date de dépôt: 18.06.2015
(51) Int. Cl.: C04B 7/52, C04B 28/04

(54) **BETONS A ULTRA HAUTE PERFORMANCE NON AUTOPLACANT**
ULTRAHOCHLEISTUNGSBETON OHNE SELBSTVERDICHTUNG
ULTRA-HIGH-PERFORMANCE, NON-SELF-CONSOLIDATING CONCRETE

(30) Priorité: 20.06.2014 FR 1455732
(43) Date de publication de la demande: 26.04.2017
(73) Titulaire: Lafarge, 75116 Paris (FR)
(72) Inventeur: PEREZ, Fabien, 38291 Saint Quentin Fallavier (FR); TOUSSAINT, Fabrice, 38291 Saint Quentin Fallavier (FR); FERREIRA, Laurent, 38291 Saint Quentin Fallavier (FR)
(74) Mandataire: Regimbeau
(86) Numéro de dépôt international: PCT/EP2015/063728
(87) Numéro de publication internationale: WO 2015/193444

(56) Documents cités:
- EP-A1- 0 934 915
- EP-A1- 2 275 390
- WO-A1-2009/111295
- WO-A1-2010/109095
- FR-A1- 2 943 662
- US-A1- 2012 012 034

## Description

L'invention concerne les liants hydrauliques qui permettent d'obtenir un béton à ultra haute performance et à faible teneur en ciment, des mélanges comprenant ce liant ainsi que des compositions hydrauliques comprenant ce mélange. Le document WO2010109095 A1 décrit un béton à ultra haute performance, autoplaçant, comprenant 8-63 % en masse d'un ciment Portland présentant un D90 inférieur à 30 µm, 0.2-63% en masse d'un matériau de classe granulométrique ultrafine (D90 inférieur à 1 µm) et 25-85 % en masse d'un matériau de classe granulométrique fine (D10 et D90 sont compris entre 1 µm et 120 µm). L'utilisation de ces bétons à ultra haute performance est rendue délicate lorsqu'il s'agit de réaliser en une seule fois des pièces en béton comprenant des éléments horizontaux et des éléments verticaux ou inclinés. Par exemple, lorsqu'il s'agit de fabriquer en usine une pièce en béton dont la section finale est en U ou en L, il est nécessaire de couler séparément et horizontalement les éléments de la pièce à réaliser puis de les assembler par collage, ancrage ou vissage pour obtenir la section en U ou en L. Ceci a pour inconvénient de multiplier les opérations de fabrication de ces pièces, la fabrication de la pièce en elle-même devient complexe, augmentant les possibilités d'erreurs, et amoindrissant la robustesse des pièces.

Aussi, il existe un besoin concernant des formulations de bétons à ultra haute performance permettant de réaliser des pièces en béton en une seule étape, quelque soit leurs formes ou leurs sections, sans recourir à une étape d'assemblage.

Aussi le problème que se propose de résoudre l'invention est de fournir de nouvelles formulations de bétons à ultra haute performance non auto-plaçant (ou encore non autonivelantes), qui puissent restées en place lorsqu'elles sont appliquées sur un plan incliné ou vertical.

Par non auto-plaçant, on entend un matériau possédant une valeur de contrainte supérieure à 20 pascal, de préférence compris entre 20 et 400 Pascal, mesurée selon la méthode décrite dans la présente demande de brevet. Ce matériau est également qualifié de matériau à seuil et ne peut pas convenir comme béton auto-plaçant.

Les compositions hydrauliques selon l'invention présentent les avantages suivants :
- elles peuvent être appliquées par projection, en particulier avec un pistolet de projection ou par pulvérisation à la lance à projeter ;
- elles peuvent être utilisées dans les procédés de fabrication de pièces en béton par calandrage ;
- elles peuvent être utilisées en réparation ou réhabilitation d'ouvrage en béton existant sur des surface inclinées ou verticales, par exemple une pile ou dalle de pont, ou un quai de déchargement d'un port ;
- elles présentent des résistances mécaniques en compression à 28 jours généralement comprises de 90 à 150 MPa, voire plus;
- elles peuvent contenir des fibres leurs conférant des propriétés additionnelles intéressantes, comme la ductilité ;
- elles présentent un seuil de contrainte supérieur à 20 Pa mesuré à un gradient de cisaillement de 0,1 s⁻¹, de préférence supérieur à 80 Pa.

Dans ce but, la présente invention propose un liant hydraulique comprenant en pourcentage en masse :
- de 20 à 82 % d'un ciment Portland dont les particules présentent un D50 compris de 2 µm à 11 µm ;
- de 15 à 56 % d'une addition minérale A1 non pouzzolanique, dont les particules présentent un D50 compris de 1 à 150 µm et choisie parmi les additions calcaire telles que le carbonate de calcium, les additions siliceuses telles que le quartz, les additions minérales silico-calcaire, des schistes calcinés, des zéolithes, les cendres issues de la combustion de végétaux, et leurs mélanges;
- de 4 à 30 % d'addition minérale A2 pouzzolanique, dont les particules présentent un D50 compris de 1 à 150 µm ;
la somme de ces pourcentages étant comprise de 90 à 100%.

La présente invention a également pour objet un mélange comprenant en pourcentage en volume, au moins 43 % du liant hydraulique selon l'invention et au moins 30 % de sable, la somme de ces pourcentages étant comprise de 95 à 100%.

La présente invention a également pour objet une composition hydraulique comprenant dans un volume de 1 m³ hors air occlus
- de 140 à 246 kg d'eau ; et
- au moins 654 litres de mélange selon l'invention ;
la somme des volumes de ces 2 composants étant comprise de 900 à 1000 litres.

L'invention propose également un objet mis en forme pour le domaine de la construction comprenant le liant hydraulique selon l'invention ou le mélange selon l'invention.

L'invention cherche à offrir au moins l'un des avantages déterminants décrits ci-après.

L'invention permet de répondre au besoin de réduction des émissions de CO₂. En effet la quantité de ciment (et en particulier de clinker) utilisée dans le cadre de la présente invention est inférieure à celle qui est traditionnellement nécessaire pour les bétons à ultra haute performance, jusqu'à 200 kg/m³ de ciment par de m³ béton.

D'autres avantages et caractéristiques de l'invention apparaîtront clairement à la lecture de la description et des exemples donnés à titre purement illustratifs et non limitatifs qui vont suivre.

L'invention a pour objet un liant hydraulique comprenant en pourcentage en masse :
- de 20 à 82 % d'un ciment Portland dont les particules présentent un D50 compris de 2 µm à 11 µm ;
- de 15 à 56 % d'une addition minérale A1 non pouzzolanique, dont les particules présentent un D50 compris de 1 à 150 µm et choisie parmi les additions calcaire telles que le carbonate de calcium, les additions siliceuses telles que le quartz, les additions minérales silico-calcaire, des schistes calcinés, des zéolithes, les cendres issues de la combustion de végétaux, et leurs mélanges;
- de 4 à 30 % d'addition minérale A2 pouzzolanique, dont les particules présentent un D50 compris de 1 à 150 µm ;
la somme de ces pourcentages étant comprise de 90 à 100%.

Un liant hydraulique est un matériau qui prend et durcit par hydratation.

La prise est généralement le passage à l'état solide d'un liant hydraulique par réaction d'hydratation. La prise est généralement suivie par une période de durcissement.

Le durcissement est généralement l'acquisition des résistances mécaniques d'un liant hydraulique. Le durcissement a généralement lieu après la fin de la prise.

Le liant hydraulique selon l'invention comprend un ciment Portland. Le ciment Portland au sens de l'invention incorpore un clinker Portland. Il peut également être envisagé d'utiliser un clinker Portland broyé à titre de ciment Portland, à condition d'ajouter en outre du sulfate de calcium.

Les ciments Portland préférés sont ceux tels que définis dans la norme européenne NF EN 197-1 d'avril 2012 et ceux décrit dans la norme ASTM C150-12, plus préférentiellement ce sont les ciments CEM I.

De préférence, le liant hydraulique selon l'invention comprend de 25 à 55% de ciment Portland, plus préférentiellement de 30 à 45%, exprimé en pourcentage en masse par rapport au liant.

Les ciments convenant pour être utilisés selon la présente invention sont généralement les ciments Portland dont la surface BET est comprise de 1,20 à 3.3 m²/g.

La surface spécifique BET est une mesure de la surface réelle totale des particules, qui tient compte de la présence de reliefs, d'irrégularités, de cavités superficielles ou internes, de porosité.

Les ciments convenant pour être utilisés selon la présente invention sont de préférence les ciments dont les particules présentent un D10 compris de 1 µm à 4 µm, plus préférentiellement de 1 µm à 3 µm, encore plus préférentiellement de 1 µm à 2,5 µm.

Les ciments convenant pour être utilisés selon la présente invention sont de préférence les ciments dont les particules présentent un D50 compris de 3 µm à 11 µm, plus préférentiellement de 6 µm à 9 µm.

Les ciments convenant pour être utilisés selon la présente invention sont de préférence les ciments dont les particules présentent un D90 compris de 8 µm à 40 µm, plus préférentiellement 15 µm à 37 µm.

Le D90, également noté D_{V}90, correspond au 90^{ème} centile de la distribution en volume de taille des particules, c'est-à-dire que 90 % du volume est constitué de particules dont la taille est inférieure au D90 et 10 % de taille supérieure au D90.

De même, le D50, également noté D_{V}50, correspond au 50^{ème} centile de la distribution en volume de taille des particules, c'est-à-dire que 50 % du volume est constitué de particules dont la taille est inférieure au D50 et 50 % de taille supérieure au D50.

De même, le D10, également noté D_{V}10, correspond au 10^{ème} centile de la distribution en volume de taille des particules, c'est-à-dire que 10 % du volume est constitué de particules dont la taille est inférieure au D10 et 90 % de taille supérieure au D10.

Le D10 ou le D90 d'un ensemble de particules peut être généralement déterminé par granulométrie laser pour les particules de taille inférieure à 800 µm, ou par tamisage pour les particules de taille supérieure à 63 µm.

De préférence, le ciment Portland convenant pour être utilisé selon la présente invention a une surface spécifique BET supérieure ou égale à 1,2 m²/g, plus préférentiellement supérieure ou égale à 1,25 m²/g, de préférence compris de 1,2 à 5 m²/g.

De préférence, le ciment Portland convenant pour être utilisé selon la présente invention a une surface spécifique Blaine supérieure ou égale à 6050 cm²/g, plus préférentiellement supérieure ou égale à 6100 cm²/g.

Le ciment Portland pouvant être utilisé selon la présente invention peut être broyé et/ou séparé (par un séparateur dynamique) afin d'obtenir un ciment ayant une surface spécifique Blaine supérieure ou égale à 6050 cm²/g ou afin d'obtenir une surface spécifique BET supérieure ou égale à 1.2 m²/g. Ce ciment peut être qualifié d'ultrafin. Le ciment peut par exemple être broyé selon 2 méthodes.

Selon une première méthode, le ciment ou le clinker peut être broyé jusqu'à une surface spécifique Blaine de 6050 à 9000 cm²/g ou jusqu'à une surface spécifique BET de 1.2 à 3.2 m²/g. Un séparateur de haute efficacité, de deuxième génération ou de troisième génération, ou un séparateur de très haute efficacité, peut être utilisé dans cette première étape pour séparer le ciment ayant la finesse désirée et écarter le ciment n'ayant pas la finesse désirée. Ce ciment est alors renvoyé dans le broyeur.

Selon une deuxième méthode, un ciment Portland peut passer dans un séparateur de très haute efficacité, dit THF (très haute finesse), afin de séparer les particules de ciment ayant une surface spécifique BET ou Blaine supérieure ou égale à la finesse cible (la finesse cible étant supérieure à 1.2 m²/g ou supérieure à 6050 cm²/g) et les particules de ciment ayant une surface spécifique BET ou Blaine inférieure à la finesse cible. Les particules de ciment ayant une surface spécifique BET ou Blaine supérieure ou égale à la finesse cible peuvent être utilisées telles quelles. Les particules de ciment ayant une surface spécifique BET ou Blaine inférieure à la finesse cible peuvent être écartées ou broyées séparément jusqu'à l'obtention de la surface spécifique Blaine souhaitée. Les broyeurs qui peuvent être utilisés dans les deux méthodes sont par exemple un broyeur à boulets, un broyeur vertical, une presse à rouleaux, un broyeur horizontal (par exemple de type Horomill©) ou un broyeur vertical agité (par exemple de type Tower Mill).

Le liant hydraulique selon l'invention comprend une addition minérale A1.

De préférence, le liant hydraulique selon l'invention comprend de 25 à 50% de l'addition A1, plus préférentiellement de 30 à 48%, exprimé en pourcentage en masse par rapport au liant.

L'addition minérale A1 est non pouzzolanique, c'est-à-dire qu'elle ne présente pas ou pratiquement pas d'activité pouzzolanique contrairement à l'addition A2, décrite ci-dessous.

L'addition minérale A1 est essentiellement inerte. L'expression "essentiellement inerte" en relation avec l'addition minérale signifie que l'addition ne possède pratiquement pas d'activité pouzzolanique.

L'addition minérale A1 est choisie parmi les additions calcaire telles que le carbonate de calcium, les additions siliceuses telles que le quartz, les additions minérales silico-calcaire, des schistes calcinés, des zéolithes, les cendres issues de la combustion de végétaux, et leurs mélanges.

Les additions calcaire peuvent être, par exemple un carbonate de calcium naturel broyé (par exemple la craie, la calcite, le marbre ou un autre carbonate de calcium naturel), un carbonate de calcium précipité (également connu sous le nom de carbonate de calcium synthétique) ou leurs mélanges.

De préférence, les additions minérales A1 convenant selon l'invention peuvent être le carbonate de baryum, la dolomite, le talc, la silice cristalline, le dioxyde de titane pyrogéné, le dioxyde de titane, le basalte, la bauxite, ou un de leurs mélanges.

Le carbonate de calcium broyé et le carbonate de calcium précipité sont préférés.

Les additions minérales A1 sont, par exemple des schistes calcinés (par exemple tels que définis dans la norme NF EN 197-1, paragraphe 5.2.5), des additions minérales comprenant du carbonate de calcium, par exemple du calcaire (par exemple tel que défini dans la norme NF EN 197-1, paragraphe 5.2.6), des additions minérales comprenant de la silice, par exemple des fines siliceuses ou leurs mélanges.

Le liant hydraulique selon l'invention comprend une addition minérale A2.

De préférence, le liant hydraulique selon l'invention comprend de 4 à 25% de l'addition A2, plus préférentiellement de 5 à 30%, exprimé en pourcentage en masse par rapport au liant.

Une addition minérale pouzzolanique est décrite dans le livre de Lea intitulé Chemistry of Cement and Concrete, 4ème édition, publié par Arnold, comme un matériau inorganique, naturel ou synthétique, qui durcit dans l'eau lorsqu'il est mélangé avec de l'hydroxyde de calcium (chaux) ou avec un matériau qui peut libérer de l'hydroxyde de calcium (par exemple le clinker de ciment Portland). Une addition minérale pouzzolanique est généralement un matériau siliceux ou siliceux et alumineux qui, seul, possède peu ou pas de valeur en tant que ciment, mais qui est capable, en présence d'humidité, de réagir chimiquement avec de l'hydroxyde de calcium à température ambiante pour former des composés ayant des propriétés cimentaires.

Une addition minérale pouzzolanique s'entend aussi comme une addition minérale à activité pouzzolanique.

Les additions minérales A2 convenant également selon l'invention peuvent être choisies parmi la fumée de silice, la micro-silice, les matériaux pouzzolaniques, le métakaolin, les laitiers, éventuellement broyés, ou leurs mélanges.

La fumée de silice convenant selon l'invention peut être un sous-produit de la métallurgie et de la production de silicium. La fumée de silice est généralement formée de particules sphériques comprenant au moins 85% en masse de silice amorphe. La fumée de silice comprend généralement des particules élémentaires présentant un diamètre compris de 5 à 10 nm. Ces particules élémentaires de fumée de silice peuvent s'agglomérer pour former des particules agglomérées présentant un diamètre de 0,1 à 1 µm. Ces particules agglomérées peuvent s'agglomérer pour former des agrégats présentant un diamètre de 20 à 30 µm.

La fumée de silice présente généralement une surface spécifique BET comprise de 4 à 30 m²/g.

De préférence, la fumée de silice utilisée selon la présente invention peut être choisie parmi les fumées de silice selon la norme Européenne NF EN 197-1 d'avril 2012.

De préférence, les matériaux pouzzolaniques utilisée selon la présente invention sont ceux tels que définis dans la norme Européenne NF EN 197-1 d'avril 2012.

De préférence, les laitiers utilisée selon la présente invention sont ceux tels que définis dans la norme Européenne NF EN 197-1 d'avril 2012.

De préférence, les cendres volantes utilisée selon la présente invention sont ceux tels que définis dans la norme Européenne NF EN 197-1 d'avril 2012.

Le liant hydraulique selon l'invention peut comprendre en outre du sulfate de calcium.

De préférence, le liant hydraulique selon l'invention comprend en outre de 0 à 8 % de sulfate de calcium, exprimé en pourcentage en masse par rapport au liant.

Le sulfate de calcium utilisé selon la présente invention inclut le gypse (sulfate de calcium dihydraté, CaSO₄.2H₂O), le semi-hydrate (CaSO₄.1/2H₂O), l'anhydrite (sulfate de calcium anhydre, CaSO₄) ou un de leurs mélanges. Le gypse et l'anhydrite existent à l'état naturel. Il est également possible d'utiliser un sulfate de calcium qui est un sous-produit de certains procédés industriels.

De préférence, lorsque la finesse du ciment augmente, il est possible d'augmenter également la quantité de sulfate de calcium pour maintenir des résistances mécaniques équivalentes. L'homme du métier saura de par ses connaissances optimiser la quantité de sulfate de calcium en utilisant des méthodes connues. Cette optimisation se fera en fonction de la finesse des particules de ciment.

L'invention a également pour autre objet un mélange comprenant en pourcentage en volume, au moins 43 % du liant hydraulique selon l'invention et au moins 30 % de sable, la somme de ces pourcentages étant comprise de 95 à 100%.

Le mélange selon l'invention comprend un sable.

De préférence, le sable du mélange selon l'invention est un sable siliceux, un sable de bauxite calcinée, un sable silico-calcaire, un sable calcaire ou leurs mélanges.

La granulométrie des sables est généralement déterminée par tamisage.

De préférence, le mélange selon l'invention comprend un sable dont les particules présentent un D10 compris de 50 µm à 1 mm, plus préférentiellement compris de 55 à 500 µm.

De préférence, le mélange selon l'invention comprend un sable dont les particules présentent un D50 compris de 130 à 3 mm, plus préférentiellement compris de 150 à 500 µm.

De préférence, le mélange selon l'invention comprend un sable dont les particules présentent un D90 inférieur ou égal à 5 mm, plus préférentiellement un D90 compris de 220 µm à 5 mm, encore plus préférentiellement un D90 compris de 250 µm à 1 000 µm.

De préférence, le mélange selon l'invention comprend un sable dont les particules présentent un D10 compris de 100 µm à 1 mm, un D50 compris de 200 µm à 3 mm et un D90 de 300 µm à 5 mm.

L'invention a également pour autre objet une composition hydraulique comprenant dans un volume de 1 m³ hors air occlus
- de 140 à 246 litres d'eau ; et
- au moins 654 litres de mélange selon l'invention ;
la somme de ces 2 composants étant comprise de 900 à 1000 litres.

La composition hydraulique selon l'invention inclut à la fois les compositions à l'état frais et à l'état durci, par exemple un coulis de ciment, un mortier ou un béton.

La composition hydraulique selon l'invention peut également comprendre un adjuvant, par exemple un de ceux décrits dans les normes EN 934-2 de septembre 2002, EN 934-3 de novembre 2009 ou EN 934-4 d'août 2009, et éventuellement des additions minérales.

De préférence, les compositions hydrauliques selon l'invention comprennent également un adjuvant pour composition hydraulique, par exemple un accélérateur, un agent viscosant, un agent antimousse, un retardateur, un inertant des argiles, un agent réducteur de retrait, un plastifiant et/ou un superplastifiant. En particulier, il est utile d'inclure un superplastifiant de type polycarboxylate, en particulier de 0,01 à 6 %, de préférence de 0,1 à 4 %, en masse, pourcentage exprimé en masse d'extrait sec par rapport à la masse de ciment.

Il est à noter que ces adjuvants peuvent être ajoutés au liant ou au mélange selon l'invention.

La composition hydraulique selon l'invention peut comprendre en outre un agent fluidifiant ou un superplastifiant.

Le terme "superplastifiant" tel qu'utilisé dans la présente description et les revendications qui l'accompagnent est à comprendre comme incluant à la fois les réducteurs d'eau et les superplastifiants tels que décrits dans le livre intitulé « Concrete Admixtures Handbook, Properties Science and Technology », V.S. Ramachandran, Noyes Publications, 1984.

Un réducteur d'eau est défini comme un adjuvant qui réduit de typiquement 10 à 15 % la quantité d'eau de gâchage d'un béton pour une ouvrabilité donnée. Les réducteurs d'eau incluent, par exemple les lignosulfonates, les acides hydroxycarboxyliques, les glucides et d'autres composés organiques spécialisés, par exemple le glycérol, l'alcool polyvinylique, l'alumino-méthyl-siliconate de sodium, l'acide sulfanilique et la caséine.

Les superplastifiants appartiennent à une nouvelle classe de réducteurs d'eau, chimiquement différents des réducteurs d'eau normaux et capables de réduire les quantités d'eau d'environ 30 %. Les superplastifiants ont été globalement classés en quatre groupes : les condensats sulfonés de naphtalène formaldéhyde (SNF) (généralement un sel de sodium) ; les condensats sulfonés de mélamine formaldéhyde (SMF) ; les lignosulfonates modifiés (MLS) ; et les autres. Des superplastifiants plus récents incluent des composés polycarboxyliques comme les polycarboxylates, par exemple les polyacrylates. Un superplastifiant est de préférence un superplastifiant nouvelle génération, par exemple un copolymère contenant un polyéthylène glycol comme chaîne greffée et des fonctions carboxyliques dans la chaîne principale comme un éther polycarboxylique. Les polycarboxylates-polysulfonates de sodium et les polyacrylates de sodium peuvent aussi être utilisés. Les dérivés d'acide phosphonique peuvent aussi être utilisés. La quantité nécessaire de superplastifiant dépend généralement de la réactivité du ciment. Plus la réactivité est faible, plus la quantité nécessaire de superplastifiant est faible. Pour réduire la quantité totale de sels alcalins, le superplastifiant peut être utilisé sous forme de sel de calcium plutôt que sous forme de sel de sodium.

Des dérivés d'acides phosphoniques peuvent également être utilisés. Des polycarboxylate-polysulfonates de sodium et des polyacrylates de sodium peuvent également être utilisés. La quantité de superplastifiant requise dépend en général de la réactivité du ciment. Plus la réactivité est faible, plus la quantité de superplastifiant nécessaire est faible. Afin de réduire la teneur totale en sels alcalins, le superplastifiant peut être utilisé sous forme de sel de calcium plutôt que de sel de sodium.

La composition hydraulique selon l'invention peut comprendre en outre un agent anti-mousse, par exemple polydiméthylsiloxane. Les agents anti-mousses comprennent également les silicones sous forme de solution, de solide ou de préférence sous forme de résine, d'huile ou d'émulsion, de préférence dans l'eau. Plus particulièrement adaptés sont les silicones comprenant des groupements (RSiO_{0,5}) et (R₂SiO). Dans ces formules, les radicaux R, qui peuvent être identiques ou différents, sont de préférence un atome d'hydrogène ou un groupe alkyle de 1 à 8 atomes de carbone, le groupe méthyle étant préféré. Le nombre de motifs est de préférence de 30 à 120.

La composition hydraulique selon l'invention peut comprendre en outre un agent viscosant et/ou un agent de modification de la limite d'écoulement (généralement pour accroître la viscosité et/ou la limite d'écoulement). De tels agents comprennent : les dérivés de cellulose, par exemple des éthers de cellulose solubles dans l'eau, tels que les éthers de carboxyméthyl, méthyl, éthyl, hydroxyéthyl et hydroxypropyl de sodium ; les alginates ; et le xanthane, la carraghénine ou la gomme de guar. Un mélange de ces agents peut être utilisé.

La composition hydraulique selon l'invention peut comprendre en outre un accélérateur et/ou un retardateur.

La composition hydraulique selon l'invention peut comprendre en outre un agent anti-mousse.

La composition hydraulique selon l'invention peut comprendre en outre des fibres, par exemple des fibres minérales (verre, basalte), des fibres organiques, des fibres métalliques (acier) ou un mélange de celles-ci.

Les fibres organiques peuvent notamment être choisies parmi les fibres d'alcool polyvinylique (APV), les fibres de poly-acrylonitrile (PAN), les fibres de polyethylène haute densité (PEHD), les fibres de polyamide ou polyimide, des fibres de polypropylène, les fibres d'aramide ou les fibres de carbone. Des mélanges de ces fibres peuvent également être utilisés.

Ces fibres organiques peuvent se présenter sous forme d'objet constitué soit de monobrin, soit de multibrin, le diamètre de l'objet allant de 25 microns à 800 microns. La longueur individuelle des fibres organiques est de préférence comprise entre 10 et 50 mm.

Pour ce qui est des fibres métalliques, il peut s'agir de fibres métalliques choisies parmi les fibres d'acier telles que les fibres d'acier à haute tenue mécanique, les fibres d'acier amorphe, ou encore les fibres d'acier inoxydable. Eventuellement, les fibres d'acier peuvent être revêtues d'un métal non ferreux tel que le cuivre, le zinc, le nickel (ou leurs alliages).

La longueur individuelle des fibres métalliques est de préférence d'au moins 2 mm et est, encore plus préférentiellement, comprise dans la gamme 10-30 mm.

On peut utiliser des fibres crénelées, ondulées ou crochetées aux extrémités.

De préférence, la quantité de fibres est comprise de 0 à 6 %, encore plus préférentiellement de 1 à 5 % du volume de la composition hydraulique.

Le recours à des mélanges de fibres de caractéristiques différentes permet d'adapter les propriétés du béton par rapport aux caractéristiques recherchées.

Il est à noter que les fibres peuvent être ajoutées au liant ou au mélange selon l'invention.

La composition hydraulique selon l'invention peut être préparée en gâchant le mélange selon l'invention ou le liant hydraulique selon l'invention avec de l'eau.

Selon un mode de réalisation avantageux du procédé de préparation d'une composition de béton selon l'invention, la quantité d'eau utilisée est de 140 à 246 l/m³, et de préférence de 180 à 235 l/m³.

La composition hydraulique peut être renforcée, par exemple par des armatures métalliques.

La composition hydraulique peut être précontrainte, par des câbles ou des tendons adhérents, ou post-tendu, par des câbles ou des tendons ou des gaines ou des barres non adhérents. La précontrainte, sous la forme de pré-tension ou post-tension, est particulièrement adaptée aux compositions fabriquées selon la présente invention.

Avantageusement, les compositions hydrauliques obtenues selon l'invention présentent une résistance à la compression supérieure ou égale à 90 MPa à 28 jours après le gâchage et/ou supérieure ou égale à 95 MPa après traitement thermique, par exemple après un traitement thermique de 2 jours à 90°C, réalisé après 2 jours à 20°C.

La composition hydraulique selon l'invention peut être préparée selon des procédés connus de l'homme du métier, comprenant le mélange des composants solides et de l'eau, la mise en forme (par exemple projection, pulvérisation ou calandrage) et durcissement.

La composition hydraulique selon l'invention peut être soumise à un traitement thermique après la prise pour améliorer ses propriétés mécaniques. Le traitement après prise, appelé également la cure thermique du béton, est de façon générale réalisé à une température de 60° C à 90°C. La température du traitement thermique doit être inférieure à la température d'ébullition de l'eau à la pression ambiante. La température du traitement thermique après prise est généralement inférieure à 100°C.

La durée du traitement thermique après prise peut être, par exemple, de 6 heures à 4 jours, de préférence d'environ 2 jours. Le traitement thermique peut commencer, de façon générale au moins un jour après le début de la prise et de préférence sur du béton âgé de 1 à 7 jours à 20°C.

Le traitement thermique peut être réalisé dans des environnements secs ou humides ou selon des cycles qui alternent les deux environnements, par exemple, un traitement de 24 heures dans un environnement humide suivi d'un traitement de 24 heures dans un environnement sec.

L'invention se rapporte également à un objet mis en forme pour le domaine de la construction comprenant le liant hydraulique selon l'invention ou le mélange selon l'invention.

Les méthodes de mesures suivantes ont été utilisées :

### Méthode de granulométrie laser

Les courbes granulométriques des différentes poudres sont obtenues à partir d'un granulomètre laser Malvern MS2000. La mesure s'effectue dans un milieu approprié (par exemple, en milieu aqueux) ; la taille des particules doit être comprise de 0,02 µm à 2 mm. La source lumineuse est constituée par un laser rouge He-Ne (632 nm) et une diode bleue (466 nm). Le modèle optique est celui de Fraunhofer, la matrice de calcul est de type polydisperse.

Une mesure de bruit de fond est d'abord effectuée avec une vitesse de pompe de 2000 tr/min, une vitesse d'agitateur de 800 tr/min et une mesure du bruit sur 10 s, en l'absence d'ultrasons. On vérifie alors que l'intensité lumineuse du laser est au moins égale à 80%, et que l'on obtient une courbe exponentielle décroissante pour le bruit de fond. Si ce n'est pas le cas, les lentilles de la cellule doivent être nettoyées.

On effectue ensuite une première mesure sur l'échantillon avec les paramètres suivants : vitesse de pompe de 2000 tr/min, vitesse d'agitateur de 800 tr/min, absence d'ultrasons, limite d'obscuration entre 10 et 20 %. L'échantillon est introduit pour avoir une obscuration légèrement supérieure à 10 %. Après stabilisation de l'obscuration, la mesure est effectuée avec une durée entre l'immersion et la mesure fixée à 10 s. La durée de mesure est de 30 s (30000 images de diffraction analysées). Dans le granulogramme obtenu, il faut tenir compte du fait qu'une partie de la population de la poudre peut être agglomérée.

On effectue ensuite une seconde mesure (sans vidanger la cuve) avec des ultrasons. La vitesse de pompe est portée à 2500 tr/min, l'agitation à 1000 tr/min, les ultrasons sont émis à 100 % (30 watts). Ce régime est maintenu pendant 3 minutes, puis on revient aux paramètres initiaux : vitesse de pompe de 2000 tr/min, vitesse d'agitateur de 800 tr/min, absence d'ultrasons. Au bout de 10 s (pour évacuer les bulles d'air éventuelles), on effectue une mesure de 30 s (30000 images analysées). Cette seconde mesure correspond à une poudre désagglomérée par dispersion ultrasonique.

Chaque mesure est répétée au moins deux fois pour vérifier la stabilité du résultat. L'appareil est étalonné avant chaque séance de travail au moyen d'un échantillon standard (silice C10 Sifraco) dont la courbe granulométrique est connue. Toutes les mesures présentées dans la description et les gammes annoncées correspondent aux valeurs obtenues avec ultrasons.

### Méthode de mesure de la surface spécifique BET

La surface spécifique des différentes poudres est mesurée comme suit. On prélève un échantillon de poudre de masse suivante : 0,1 à 0,2 g pour une surface spécifique estimée à plus de 30 m²/g ; 0,3 g pour une surface spécifique estimée à 10-30 m²/g ; 1 g pour une surface spécifique estimée à 3-10 m²/g ; 1,5 g pour une surface spécifique estimée à 2-3 m²/g ; 2 g pour une surface spécifique estimée à 1.5-2 m²/g ; 3 g pour une surface spécifique estimée à 1-1,5 m²/g.

On utilise une cellule de 3 cm³ ou de 9 cm³ selon le volume de l'échantillon. On pèse l'ensemble de la cellule de mesure (cellule + tige en verre). Puis on ajoute l'échantillon dans la cellule : le produit ne doit pas être à moins d'un millimètre du haut de l'étranglement de la cellule. On pèse l'ensemble (cellule + tige en verre + échantillon). On met en place la cellule de mesure sur un poste de dégazage et on dégaze l'échantillon. Les paramètres de dégazage sont de 30 min / 45°C pour le ciment Portland, le gypse, les pouzzolanes ; de 3 h / 200°C pour les laitiers, cendres volantes, ciment alumineux, calcaire ; et de 4 h / 300°C pour l'alumine de contrôle. La cellule est rapidement bouchée avec un bouchon après le dégazage. On pèse l'ensemble et on note le résultat. Toutes les pesées sont effectuées sans le bouchon, celui-ci étant temporairement retiré pour faire la mesure. La masse de l'échantillon est obtenue par soustraction de la masse de la cellule à la somme des masses de la cellule et de l'échantillon dégazé.

On effectue ensuite l'analyse de l'échantillon après l'avoir mis en place sur le poste de mesure. L'analyseur est le SA 3100 de Beckman Coulter. La mesure repose sur l'adsorption d'azote par l'échantillon à une température donnée, ici la température de l'azote liquide soit environ -196°C. L'appareil mesure la pression de la cellule de référence dans laquelle l'adsorbat est à sa pression de vapeur saturante et celle de la cellule de l'échantillon dans laquelle des volumes connus d'adsorbat sont injectés. La courbe résultant de ces mesures est l'isotherme d'adsorption. Dans le processus de mesure, la connaissance du volume mort de la cellule est nécessaire : une mesure de ce volume est donc réalisée avec de l'hélium avant l'analyse.

La masse de l'échantillon calculée précédemment est entrée en tant que paramètre. La surface BET est déterminée par le logiciel par régression linéaire à partir de la courbe expérimentale. L'écart-type de reproductibilité obtenu à partir de 10 mesures sur une silice de surface spécifique 21,4 m²/g est de 0,07. L'écart-type de reproductibilité obtenu à partir de 10 mesures sur un ciment de surface spécifique 0,9 m²/g est de 0,02. Une fois toutes les deux semaines un contrôle est effectué sur un produit de référence. Deux fois par an, un contrôle est réalisé avec l'alumine de référence fournie par le constructeur.

### Méthode de mesure de la résistance de compression

Quelle que soit l'échéance, la résistance de compression est mesurée sur un échantillon cylindrique ayant un diamètre de 7 cm et une hauteur de 14 cm, les surfaces sur lesquelles la force de compression est appliquée à l'échantillon sont aplanies.

La force de compression appliquée est augmentée à un taux de 3,85 kN/sec durant le test de compression.

### Détermination du seuil de contrainte

Le seuil de contrainte est la valeur de contrainte (exprimée en Pascal) mesurée à un gradient de cisaillement de 0,1 s⁻¹ au rhéomètre Rhéolab QC fourni par la société Anton Paar, avec l'outil simple hélice simple pas, nommé outil SHSP, lors d'une phase de descente en vitesse de cisaillement. La mesure est généralement réalisée à température ambiante.

La composition hydraulique est disposée dans une cuve cylindrique de diamètre 45 mm et de hauteur 120mm. La cuve est positionnée dans le rhéomètre. L'outil SHSP est introduit dans la cuve. Un premier gradient de cisaillement est appliqué de manière progressive de 0 à 20 s⁻¹ en 60 secondes, puis un second gradient de cisaillement est appliqué de 20 s⁻¹ à 0,1 s⁻¹ en 60 secondes. La valeur de contrainte obtenue est relevée.

### Exemples

La présente invention est décrite par les exemples A,B,C,D,E,F,G,H qui suivent, non limitatifs.
- Matières premières:
   ✔ Ciment 52,5N PMES Le Teil Lafarge France
      ∘ LHY-4521-1, LHY-4815 et LHY-4521
   ✔ Ciment 52.5 Sagunto Lafarge Espagne
      ∘ LHY-4845
   ✔ Ciment 52.5 Villaluenga Lafarge Espagne
      ∘ LHY-4729
   ✔ Métakaolin Metamax (MK) BASF, US
   ✔ Superpozz (SPzz) Lafarge, Afrique du sud
   ✔ Millisil C6 Sibelco, France
   ✔ Durcal 1 (D1) Omya, France
   ✔ Agent réducteur de retrait (SRA) BASF, US
   ✔ Fumée de silice MST02 Le Pontet SEPR, France
   ✔ Anhydrite Micro A Maxit, France
   ✔ Sable n°1 BE01 Sibelco, France
   ✔ Sable n°2 PE2LS Fulchiron, France
   ✔ Sable n°3 Betsinor Betsinor, France
   ✔ Superplastifiant F2 Chryso, France
   ✔ Prelom (PL) BASF, France

Les ciments ont été préparés par broyage et séparation du ciment Portland CEM I 52.5 provenant des cimenteries identifiées. Ce broyage a été réalisé en utilisant un broyeur à jet d'air associé à un séparateur à très haute efficacité. Les ciments broyés obtenus avaient un D10, un D50, un D90, une surface spécifique Blaine (SSB) et une surface BET tels que mentionné dans le tableau I ci-dessous.

**Tableau I**

| | d10 | d50 | d90 | SSB | BET | N° Lot |
|---|---|---|---|---|---|---|
| Ciment 52,5N PMES Le Teil | 1,92 | 7,98 | 18,09 | 5520 | 1,6 | LHY-4521-1 |
| | 1,75 | 8,00 | 22,21 | 5110 | 3,09 | LHY-4815 |
| | 1,86 | 11,75 | 36,20 | n.d. | 1,35 | LHY 4521 |
| Ciment 52.5 Sagunto | 1,63 | 8,56 | 25,10 | 5950 | 2 | LHY-4845 |
| Ciment 52.5 Villaluenga | 1,35 | 5,72 | 14,62 | 7240 | 2,55 | LHY-4729 |

Le Millisil C6 est un filler siliceux (quartz) provenant de la société Sibelco. Il correspond à l'addition A1. Il a un D10 de 2,9 µm, un D50 de 28,9 µm, et un D90 de 95,6 µm.

La fumée de silice 980 NS provenant de la société SEPR se caractérise par une surface BET de 13 m²/g et par un D50 de 4,24 µm II correspond à l'addition A2.

Le métakaolin Metamax se caractérise par une surface BET de 11.8 m²/g et par un D50 de 4,37 µm.

La superpozz est une pouzzolane provenant de la société Lafarge se caractérise par une surface BET de 1,05 m²/g et par un D50 de 5 µm.

L'anhydrite Micro A est un sulfate de calcium anhydre micronisé provenant de la société Maxit. Elle a un D10 de 1,6 µm, un D50 de 12,3 µm, et un D90 de 17,0 µm.

Le sable n°1 BE01 est un sable siliceux provenant de la société Sibelco. Il a un D10 d'environ 210 µm et un D50 d'environ 310 µm, un D90 d'environ 400 µm.

Le sable n°2 est un sable siliceux provenant de la société Fulchiron. Il a un D10 d'environ 60 µm et un D50 d'environ 150 µm, un D90 d'environ 250 µm.

Le sable n°3 est un sable siliceux provenant de la société Betsinor. Il a un D10 d'environ 170 µm et un D50 d'environ 245 µm, un D90 d'environ 350 µm.

Le superplastifiant F2 est un superplastifiant de nouvelle génération à base de polycarboxylate modifié dont la concentration en extrait sec est de 29,51 %, pourcentage en masse .

Le superplastifiant Prelom est à base d'éther polycarboxylique modifié, il s'agit du Prélom 300 de la société BASF dont la concentration en extrait sec est de 15 %, pourcentage en masse.

### Matériels :

- un malaxeur pétrin RAYNERI R601, qui a été fourni par la société VMI avec une cuve de 10 litres. Ce malaxeur exerce un mouvement de rotation planétaire ;
- des moules cylindriques en carton de diamètre 7 cm et de hauteur 14 cm ;
- une enceinte climatique à 95-100% d'hygrométrie relative et 90°C +/-1 °C fournie par la société Verre Labo Mula ;
- une chambre humide à 95-100% d'hygrométrie relative et 20 +/-1 °C

### Protocole de préparation de la composition hydraulique selon l'invention:

Le béton (composition hydraulique) a été fabriqué selon le protocole décrit ci-après :
1) introduction des matières sèches (sable, A1, ciment, sulfate de calcium et fumée de silice) dans le bol du malaxeur Rayneri ;
2) malaxage pendant 60 secondes à la vitesse de 15 tours par minute, pour homogénéiser les matières sèches ;
3) introduction de l'eau de gâchage et du superplastifiant pendant 30 secondes, à la vitesse de rotation de 15 tours par minute;
4) malaxage pendant 1 minute à la vitesse de 15 tours par minute;
5) malaxage pendant 3 minutes et 30 secondes à la vitesse de 45 tours par minute.

Un béton frais a été obtenu. Le béton a été coulé dans les moules cylindriques. Les éprouvettes moulées obtenues sont fermées hermétiquement et mises en attente pendant 24 heures à 20°C. Ensuite, les éprouvettes sont démoulées et sont placées soit :
- en chambre humide pendant 28 jours à 20°C et 100% d'humidité relative ; soit
- en chambre humide pendant 7 jours à 20°C et 100% d'humidité relative, puis en enceinte climatique pendant 48h à 90° C et 100% d'humidité relative (traitement thermique).

Puis les résistances mécaniques ont été mesurées.

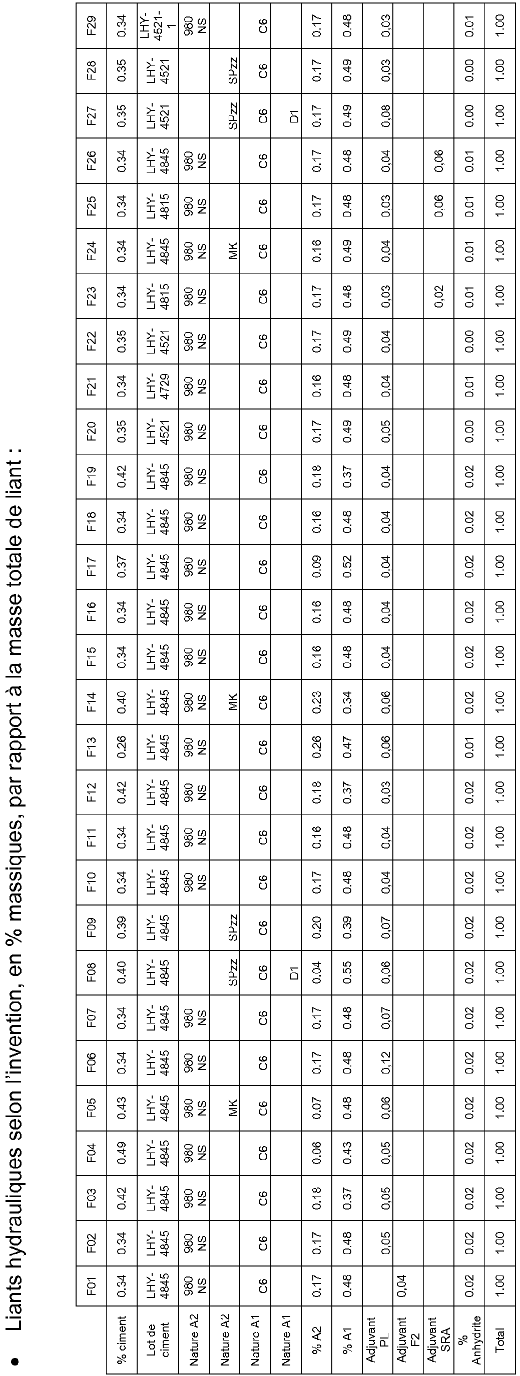

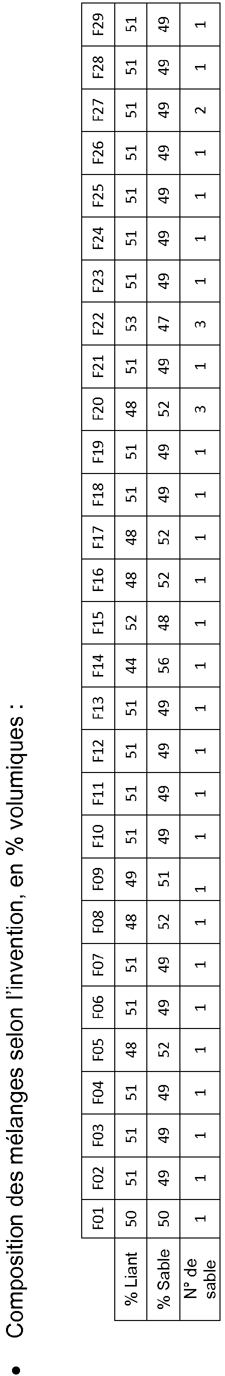

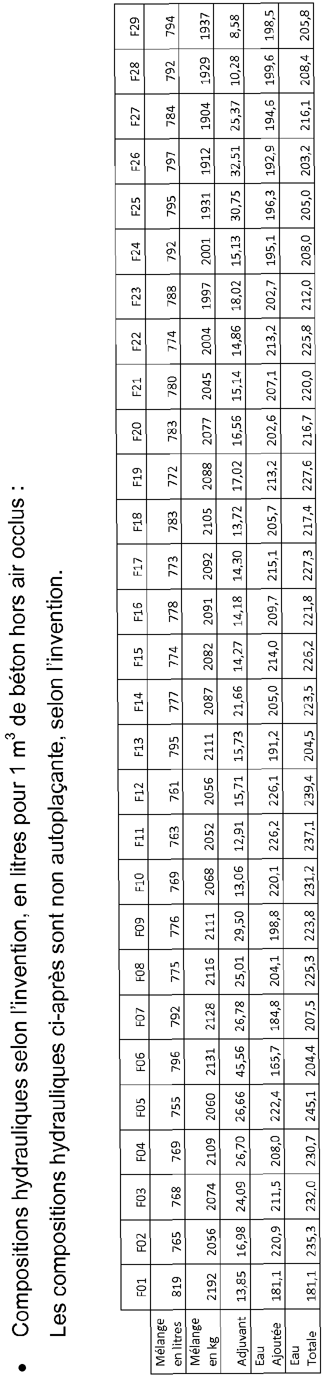

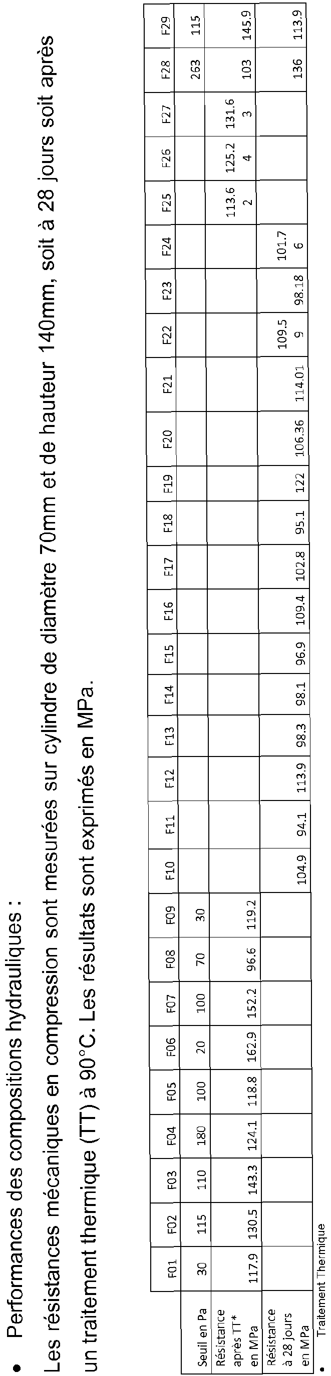

## Revendications

1. Liant hydraulique comprenant en pourcentage en masse :
- de 20 à 82 % d'un ciment Portland dont les particules présentent un D50 compris de 2 µm à 11 µm ;
- de 15 à 56 % d'une addition minérale A1 non pouzzolanique, dont les particules présentent un D50 compris de 1 à 150 µm et choisie parmi les additions calcaire telles que le carbonate de calcium, les additions siliceuses telles que le quartz, les additions minérales silico-calcaire, des schistes calcinés, des zéolithes, les cendres issues de la combustion de végétaux, et leurs mélanges ;
- de 4 à 30 % d'addition minérale A2 pouzzolanique, dont les particules présentent un D50 compris de 1 à 150 µm ;
la somme de ces pourcentages étant comprise de 90 à 100%.

2. Liant hydraulique selon la revendication 1 **caractérisé en ce que** le ciment est un ciment CEM I.

3. Liant hydraulique selon la revendication 1 ou 2 **caractérisé en ce qu'**il comprend en outre du sulfate de calcium.

4. Liant hydraulique selon l'une quelconque des revendications précédentes **caractérisé en ce que** l'addition minérale A2 est choisie parmi la fumée de silice, la micro-silice, les matériaux pouzzolaniques, le métakaolin, les laitiers, éventuellement broyés, ou leurs mélanges.

5. Liant hydraulique selon l'une quelconque des revendications précédentes **caractérisé en ce que** les particules du ciment présentent un D90 compris de 8 µm à 40 µm.

6. Mélange comprenant en pourcentage en volume, au moins 43 % du liant hydraulique selon l'une quelconque des revendications 1 à 6 et au moins 30 % de sable, la somme de ces pourcentages étant comprise de 95 à 100%.

7. Mélange selon la revendication 6 **caractérisé en ce qu'**il comprend en outre un sable dont les particules présentent un D10 compris de 100 µm à 1 mm, un D50 compris de 200 µm à 3 mm et un D90 de 300 µm à 5 mm.

8. Mélange selon la revendication 7 ou 8 **caractérisé en ce que** le sable est un sable siliceux ou un sable de bauxite calcinée ou leurs mélanges.

9. Composition hydraulique comprenant dans un volume de 1 m³ hors air occlus
- de 140 à 246 kg d'eau ; et
- au moins 654 litres de mélange selon l'une quelconque des revendications 6 à 8 ;
la somme des volumes de ces 2 composants étant comprise de 900 à 1000 litres.

10. Composition hydraulique selon la revendication 9 comprenant un agent anti-mousse.

11. Composition hydraulique selon l'une quelconque des revendications 9 à 10 **caractérisé en ce qu'**elle comprend en outre des fibres minérales (verre, basalte), organiques (plastique type APV) ou métalliques (acier) ou un mélange de celles-ci.

12. Objet mis en forme pour le domaine de la construction comprenant le liant hydraulique selon l'une quelconque des revendications 1 à 5 ou le mélange selon l'une quelconque des revendications 6 à 8.

## Patentansprüche

1. Hydraulisches Bindemittel, umfassend in Massenprozent:
- 20 bis 82 % eines Portland-Zements, dessen Partikel einen D50 von 2 µm bis 11 µm inklusive aufweisen;
- 15 bis 56 % eines nicht puzzolanischen mineralischen Zuschlags A1, dessen Partikel einen D50 von 1 bis 150 µm inklusive aufweisen und aus den kalkhaltigen Zuschlägen wie dem Calciumcarbonat, den siliziumhaltigen Zuschlägen wie dem Quarz, den mineralischen silizium- und kalkhaltigen Zuschlägen, den kalzinierten Schiefern, den Zeolithen, den Aschen im Ergebnis der Verbrennung von Pflanzen und deren Gemischen ausgewählt sind;
- 4 bis 30 % nicht puzzolanischen mineralischen Zuschlags A2, dessen Partikel einen D50 von 1 bis 150 µm inklusive aufweisen;
wobei die Summe dieser Prozentsätze von 90 bis 100 % inklusive beträgt.

2. Hydraulisches Bindemittel nach Anspruch 1, **dadurch gekennzeichnet, dass** der Zement ein Zement CEM I ist.

3. Hydraulisches Bindemittel nach Anspruch 1 oder 2, **dadurch gekennzeichnet, dass** er ferner Calciumsulfat umfasst.

4. Hydraulisches Bindemittel nach einem der vorangehenden Ansprüche, **dadurch gekennzeichnet, dass** der mineralische Zuschlag A2 aus dem Quarzstaub, dem Mikro-Siliciumdioxid, den puzzolanischen Materialien, dem Metakaolin, den Schlacken, eventuell zerkleinert, oder deren Gemischen ausgewählt ist.

5. Hydraulisches Bindemittel nach einem der vorangehenden Ansprüche, **dadurch gekennzeichnet, dass** die Partikel des Zements einen D90 von 8 µm bis 40 µm inklusive aufweisen.

6. Gemisch, umfassend in Volumenprozent mindestens 43 % des hydraulischen Bindemittels nach einem der Ansprüche 1 bis 6 und mindestens 30 % Sand, wobei die Summe dieser Prozentsätze 95 bis 100 % beträgt.

7. Gemisch nach Anspruch 6, **dadurch gekennzeichnet, dass** es ferner einen Sand umfasst, dessen Partikel einen D10 von 100 µm bis 1 mm inklusive, einen D50 von 200 µm bis 3 mm inklusive und einen D90 von 300 µm bis 5 mm aufweisen.

8. Gemisch nach Anspruch 7 oder 8, **dadurch gekennzeichnet, dass** der Sand ein Quarzsand oder ein kalzinierter Bauxitsand oder deren Gemische ist.

9. Hydraulische Zusammensetzung, umfassend in einem Volumen von 1 m³, eingeschlossene Luft ausgenommen,
- 140 bis 246 kg Wasser; und
- mindestens 654 Liter Gemisch nach einem der Ansprüche 6 bis 8;
wobei die Summe der Volumina dieser 2 Bestandteile von 900 bis 1000 Liter inklusive beträgt.

10. Hydraulische Zusammensetzung nach Anspruch 9, umfassend ein Anti-Schaum-Mittel.

11. Hydraulische Zusammensetzung nach einem der Ansprüche 9 bis 10, **dadurch gekennzeichnet, dass** sie ferner mineralische (Glas, Basalt), organische (Kunststoff Typ APV) oder metallische (Stahl) Fasern oder ein Gemisch derselben umfasst.

12. Geformtes Objekt für den Bereich der Konstruktion, umfassend das hydraulische Bindemittel nach einem der Ansprüche 1 bis 5 oder das Gemisch nach einem der Ansprüche 6 bis 8.

## Claims

1. A hydraulic binder comprising in mass percent:
- from 20 to 82 % of a Portland cement the particles of which have a D₅₀ comprised from 2 µm to 11 µm;
- from 15 to 56 % of a non-pozzolanic mineral addition A1, the particles of which have a D₅₀ comprised from 1 to 150 µm and selected from among limestone additions such as calcium carbonate, siliceous additions such as quartz, siliceous limestone mineral additions, calcined shales, zeolites, burnt plant ashes, and mixtures thereof;
- from 4 to 30 % of pozzolanic mineral addition A2, the particles of which have a D₅₀ comprised from 1 to 150 µm;
the sum of these percentages being comprised from 90 to 100%.

2. The hydraulic binder according to claim 1 **characterized in that** the cement is a CEM I cement.

3. The hydraulic binder according to claim 1 or 2 **characterized in that** it further comprises calcium sulfate.

4. The hydraulic binder according to any one of the preceding claims **characterized in that** the mineral addition A2 is selected from among silica fume, micro-silica, pozzolanic materials, metakaolin, slags, optionally milled, or mixtures thereof.

5. The hydraulic binder according to any one of the preceding claims **characterized in that** the particles of the cement have a D₉₀ comprised from 8 µm to 40 µm.

6. A mixture comprising in volume percent, at least 43% of the hydraulic binder according to any one of claims 1 to 6 and at least 30% of sand, the sum of these percentages being comprised from 95 to 100%.

7. The mixture according to claim 6 **characterized in that** it further comprises a sand the particles of which have a D₁₀ comprised from 100 µm to 1 mm, a D₅₀ comprised from 200 µm to 3 mm and a D₉₀ from 300 µm to 5 mm.

8. The mixture according to claim 7 or 8 **characterized in that** the sand is a siliceous sand or a calcined bauxite sand or mixtures thereof.

9. A hydraulic composition comprising in a volume of 1 m³ excluding entrained air
- from 140 to 246 kg of water; and
- at least 654 liters of mixture according to any one of claims 6 to 8;
the sum of the volumes of these 2 components being comprised from 900 to 1,000 liters.

10. The hydraulic composition according to claim 9 comprising an antifoaming agent.

11. The hydraulic composition according to any one of claims 9 to 10 **characterized in that** it further comprises mineral fibers (glass, basalt), organic fibers (plastic of the PVA type) or metal fibers (steel) or a mixture thereof.

12. A shaped object for the field of building comprising the hydraulic binder according to any one of claims 1 to 5 or the mixture according to any one of claims 6 to 8.
